# EUROPÄISCHE PATENTANMELDUNG

(11) **EP 4 134 341 A1**
(43) Veröffentlichungstag der Anmeldung: **15.02.2023**
(21) Anmeldenummer: 22178887.0
(22) Anmeldetag: 14.06.2022
(51) Int. Cl.: B65G 47/91, B65G 1/04

(54) **VORRICHTUNG ZUM ANSAUGEN UND TRANSPORTIEREN VON GEGENSTÄNDEN**

(30) Priorität: 13.08.2021 DE 102021121130
(71) Anmelder: Wolff, Siegfried, 14195 Berlin (DE); Illg, Matthias, 12305 Berlin (DE)
(72) Erfinder: Illg, Matthias, 12305 Berlin (DE)
(74) Vertreter: Müller, Wolfram Hubertus

(57) **Zusammenfassung**

Die Erfindung betrifft eine Vorrichtung zum Ansaugen und Transportieren von Gegenständen (3), die einen Stößel (1) mit zwei Enden (11, 12) aufweist. An dem einen Ende (11) ist ein Lufteinlass (110) und an dem anderen Ende (12) einen Luftauslass (120) ausgebildet. Ein Vakuumerzeuger (9) ist mit dem Luftauslass (120) verbunden. Weiter ist ein mit dem Stößel (1) verbundener, komprimierbaren Saugstutzen (2) vorgesehen, der durch den Stößel (1) in Anlage an den zu transportierenden Gegenstand (3) gebracht wird. Der Saugstutzen (2) weist an einem ersten Ende (21) eine Stirnseite (210) auf, in der eine Saugöffnung (211) ausgebildet ist, die an dem Gegenstand (3) anliegt. Ein zweites Ende des Saugstutzen (22) umschließt den Stößel (1). Dabei ist eine Einschubtiefe (4) durch den Abstand in Transportrichtung zwischen dem ersten Ende (11) des Stößels (1) und dem zweiten Ende (22) des Saugstutzens (2) definiert. Der Stößel (1) und der Saugstutzen (2) sind im Normalbetrieb strömungstechnisch verbunden, wobei ein am Luftauslass (120) des Stößels (1) angelegtes Vakuum an der Saugöffnung (211) anliegt, sodass nach einem Verschluss der Saugöffnung (211) der Aufbau eines Vakuums in Stößel (1) und Saugstutzen (2) erfolgt und ein angesaugter Gegenstand (3) in der Transportrichtung transportierbar ist. Es ist ein Schutzmechanismus vorgesehen, der den Stößel (1) in der Transportrichtung zurückzieht, wenn die Einschubtiefe (4) einen vordefinierten Wert überschreitet.

## Beschreibung

Die Erfindung betrifft eine Vorrichtung zum Ansaugen und Transportieren von Gegenständen. Dabei werden Vorrichtungen betrachtet, die Gegenstände mittels Vakuum "greifen" und transportieren. Typischerweise sind dies Kommissioniersysteme, bei denen Gegenstände wie z.B. Packungen aus Lagerregalen entnommen und an einen anderen Ort weitertransportiert werden.

Hierzu sind Vorrichtungen bekannt, bei denen Gegenstände über einen Faltenbalgsauger durch ein Vakuum angesogen werden. In dem Moment, in dem der Gegenstand am Faltenbalgsauger aufliegt, wird ein Anstieg des Vakuums festgestellt und der Faltenbalgsauger zieht den Gegenstand aus dem Regal. Dabei weisen die bekannten Vorrichtungen folgenden Nachteil auf: Falls das Vakuum beim Kontakt mit dem Gegenstand nicht stark genug ansteigt, um die Umkehr der Bewegung auszulösen, fährt die Vorrichtung weiter in Richtung des Gegenstandes und kann diesen beschädigen. Der Grund für den zu schwachen Anstieg des Vakuums kann darin bestehen, dass Nebenluft gezogen wird, obwohl der Faltenbalg an der Packung anliegt. Dies kann durch eine beschädigte Packung verursacht sein oder dadurch, dass die Packungsgeometrie ein luftdichtes Aufliegen des Faltenbalgsaugers verhindert. Ein weiterer Grund kann darin bestehen, dass die Packung im geöffneten Zustand in dem Regal liegt und der Faltenbalgsauger auf den Packungsinhalt trifft. Ebenfalls kann ein Fehlerfall auftreten, wenn die Position der Packung falsch ermittelt wurde und eine versetzte Anordnung vorliegt, bei der ein Teil des Faltenbalgsaugers frei bleibt und Luft einsaugen kann.

Wenn sich also kein Vakuum aufbaut, ist eine Beschädigung des Inhalts des betrachteten Gegenstands möglich, da die Vorrichtung immer weiter in den Gegenstand vorfährt.

Aufgabe der Erfindung ist es demnach, eine Vorrichtung zum Ansaugen und Transportieren von Gegenständen bereitzustellen, bei der die genannten Nachteile der bekannten Vorrichtungen nicht auftreten und gleichzeitig in effektiver Weise ein Gegenstand angesogen werden kann.

Diese Aufgabe wird durch eine Vorrichtung mit den Merkmalen des Anspruch 1 gelöst. Ausgestaltungen der Erfindung sind in den abhängigen Ansprüchen angegeben.

Die erfindungsgemäße Lösung umfasst eine Vorrichtung zum Ansaugen und Transportieren von Gegenständen, die einen Stößel mit zwei Enden aufweist. An dem einen Ende ist ein Lufteinlass und an dem anderen Ende ein Luftauslass angeordnet, wobei der Stößel in einer Transportrichtung linear bewegbar ist. Darüber hinaus weist die Vorrichtung einen Vakuumerzeuger auf, welcher mit dem Luftauslass verbunden ist, sowie einen mit dem Stößel verbundenen, komprimierbaren Saugstutzen. Der Saugstutzen ist dazu vorgesehen und ausgebildet, durch den Stößel in Anlage an einen Gegenstand gebracht zu werden und den Gegenstand anschließend weiter zu transportieren.

Dabei weist der Saugstutzen ein erstes und ein zweites Ende auf. Das erste Ende weist eine Stirnseite auf, in der eine Saugöffnung ausgebildet ist, wobei die Saugöffnung dazu ausgebildet ist, an dem Gegenstand anzuliegen und von diesem zumindest weitgehend verschlossen zu werden. Das zweite Ende des Saugstutzen umschließt den Stößel. Dabei ist der Stößel in dem Saugstutzen verschiebbar angeordnet, wobei das erste Ende des Stößels in den Saugstutzen eingeschoben ist. Eine Einschubtiefe ist durch den Abstand in Transportrichtung zwischen dem ersten Ende des Stößels und dem zweiten Ende des Saugstutzens definiert.

Der Stößel und der Saugstutzen sind im Normalbetrieb strömungstechnisch verbunden, wobei ein am Luftauslass des Stößels durch den Vakuumerzeuger angelegtes Vakuum an der Saugöffnung anliegt, sodass nach einem Verschluss der Saugöffnung der Aufbau eines Vakuums in Stößel und Saugstutzen erfolgt und ein angesaugter Gegenstand in der Transportrichtung transportierbar ist.

Dabei zeichnet sich die Erfindung durch einen Schutzmechanismus aus, der den Stößel in der Transportrichtung zurückzieht, wenn die Einschubtiefe einen vordefinierten Wert überschreitet.

Die Transportrichtung entspricht dabei der Richtung, in welcher im Normalbetrieb der Gegenstand aus seiner ursprünglichen Position, beispielsweise in einem Lagerregal gezogen wird. Da die Einschubtiefe angibt, wie weit der Stößel in den Saugstutzen eingeschoben ist, ist anhand der Einschubtiefe erfassbar, ob der Stößel so weit vorgefahren ist, dass eine Kollision mit der Innenseite des Saugstutzens und insbesondere mit dem Gegenstand droht.

Somit liegt der Erfindung der Gedanke zu Grunde, anhand der Einschubtiefe festzustellen, ob eine Kollision zwischen dem Stößel und dem Gegenstand droht und den Stößel zurückzufahren, bevor dieser den Gegenstand beschädigen kann. Dies ist insbesondere für den Fall adressiert, bei dem die Saugöffnung etwa aus den eingangs genannten Gründen nicht korrekt mit dem Gegenstand im Eingriff steht und dementsprechend ein Druckabfall nicht detektiert werden kann. Gleichzeitig sind durch den Vakuumerzeuger und die Saugöffnung ein Ansaugen und damit ein Ergreifen des Gegenstandes in effektiver Weise gewährleistet, ohne dass der Schutzmechanismus sich negativ auf die Ansaugfunktion auswirkt.

Somit ermöglicht die Erfindung eine sicherere Handhabung und den Transport von Gegenständen, insbesondere von Packungen, die in Lagerregalen angeordnet sind.

In einem Ausführungsbeispiel umfasst der Schutzmechanismus eine Vorschubeinheit, welche dazu ausgebildet ist, beim Überschreiten des vordefinierten Wertes der Einschubtiefe den Stößel zurückzuziehen. Die Vorschubeinheit kann dabei über einen Riementrieb mit dem Stößel verbunden sein, wobei die Riemen einen Vorschub in der Transportrichtung und der der Transportrichtung entgegengesetzten Richtung bereitstellen.

In einem weiteren Ausführungsbeispiel ist vorgesehen, dass der Schutzmechanismus eine Sensorikeinheit aufweist. Die Sensorikeinheit ist dazu ausgebildet, das Überschreiten des vordefinierten Wertes der Einschubtiefe zu detektieren und ein Signal zum Zurückziehen des Stößels an die Vorschubeinheit zu geben.

Dabei kann die Sensorikeinheit eine Lichtschranke umfassen, wobei ein Lichtsignal der Lichtschranke beim Überschreiten des für die Einschubtiefe vordefinierten Wertes unterbrochen ist. Die Verwendung einer Lichtschranke als Sensor hat den Vorteil, dass die Lichtschranke nicht unmittelbar am Saugstutzen oder dem Stößel angebracht werden muss. Auf diese Weise ist es möglich, das Überschreiten des für die Einschubtiefe vordefinierten Wertes zu erfassen, ohne dass ein bewegtes Kabel in der Vorrichtung stören würden. Kabel an beweglichen Teilen, wie hier der Stößel und der Saugstutzen, unterliegen grundsätzlich einem erhöhten Verschleiß und führen zu erhöhtem Wartungsaufwand. Demnach ist durch das Weglassen bewegter Kabel die Betriebssicherheit der Vorrichtung verbessert.

Dabei kann insbesondere vorgesehen sein, dass zwischen dem Stößel und dem Saugstutzen ein Signalunterbrecher angeordnet ist, welcher dazu ausgebildet und vorgesehen ist, sich mechanisch durch die Relativbewegung zwischen Stößel und Saugstutzen aufzustellen. Dabei stellt sich der Signalunterbrecher beim Überschreiten der Einschubtiefe über den vordefinierten Wert so weit auf, dass das Lichtsignal der Lichtschranke unterbrochen ist. Der Signalunterbrecher kann dabei beispielsweise Gelenke und starre Elemente zwischen den Gelenken umfassen und so mit dem Stößel und dem Saugstutzen verbunden sein, dass sich der Signalunterbrecher aufrichtet, wenn der Stößel und der Saugstutzen sich aufeinander zubewegen.

In einer weiteren Ausgestaltung der Erfindung ist der Schutzmechanismus dazu ausgebildet, den Stößel in der Transportrichtung zurückzuziehen, wenn der Druck im Stößel einen vordefinierten Druckwert unterschreitet. Gemäß dieser Ausführungsvariante wird somit der vordefinierte Wert der Einschubtiefe nicht direkt, sondern indirekt über eine Druckmessung erfasst. Dabei weist der Saugstutzen einen innenseitigen Vorsprung auf, der so positioniert ist, dass bei Überschreitung des vordefinierten Werts der Einschubtiefe der Lufteinlass an dem Vorsprung zur Anlage kommt und von diesem zumindest teilweise dahingehend verschlossen wird, dass der Druck im Stößel unter den vordefinierten Druckwert fällt. In dieser Ausgestaltung entspricht der vordefinierte Wert der Einschubtiefe dem Abstand zwischen dem Vorsprung und den zweiten Ende des Saugstutzens.

Auch diese Ausführungsvariante ermöglicht es, das Überschreiten des für die Einschubtiefe vordefinierten Wertes zu erfassen, ohne dass ein bewegtes Kabel in der Vorrichtung stören würden. So erfolgt das Überschreiten des vordefinierten Wertes der Einschubtiefe über eine Druckmessung. Eine solche Druckmessung ist aber ohnehin vorhanden und notwendig, um im Normalbetrieb erkennen zu können, wenn der Gegenstand durch den Faltenbalg ausreichend angesaugt ist und in der Transportrichtung bewegt werden kann.

Dabei kann eine Vorschubeinheit dazu vorgesehen und ausgebildet sein, den Stößel zurückzuziehen, wenn der Druck im Stößel den vordefinierten Druckwert unterschreitet. Dies ist dann der Fall, wenn die Saugöffnung (im Normalfall) oder der Lufteinlass (bei Einsatz des Schutzmechanismus) so weit verschlossen ist, dass ein Druckabfall unter den vordefinierten Druckwert vorliegt.

Weitergehend kann vorgesehen sein, dass bei Anlage des Lufteinlasses am Vorsprung der Lufteinlass nicht vollständig verschlossen wird, um einen geringen Luftstrom vom Faltenbalg her aufrechtzuerhalten. Hierbei ist folgendes zu beachten. Einerseits muss der Lufteinlass bei Anlage des Vorsprungs so weit verschlossen sein, dass der vordefinierte Druckwert unterschritten wird, um den Vakuumfall zu erkennen und der Stößel zurückgezogen wird. Andererseits muss weiterhin eine geringe Luftmenge angesaugt werden können. Der Grund hierfür betrifft den Normalfall, wenn der Gegenstand die Saugöffnung verschließt und angesogen wird. Dabei kann es sein, dass die Saugöffnung nicht vollständig verschlossen ist, so dass in geringem Maße Luft durch die Saugöffnung in den Faltenbalg strömt. Wenn nun während des Transports aus irgendeinem Grund der Lufteinlass des Stößels in Anlage an den Vorsprung gerät und diesen vollständig verschließen würde, so würde die durch die Saugöffnung einströmende Luft das Vakuum im Faltenbalg auflösen (da die einströmende Luft aufgrund des verschlossenen Stößels nicht abgesaugt wird) und der Gegenstand würde vom Faltenbalg während des Transports abfallen.

Die Vorrichtung weist in einer Erfindungsvariante Mittel zum Detektieren des Innendrucks im Stößel auf, wobei die Vorschubeinheit dazu ausgebildet ist, den Stößel in der Transportrichtung vom Gegenstand zurückzuziehen, wenn der Innendruck den vordefinierten Druckwert unterschreitet. Die Messung des Innendrucks im Stößel hat den Vorteil, dass sowohl für den Normalbetrieb, wenn ein Gegenstand im Eingriff ist, als auch in dem Fall, in dem eine Kollision vermieden wird, der Druck im Inneren des Stößels unter den vordefinierten Wert sinkt: Wenn ein Gegenstand durch die Saugöffnung angesogen und gehalten wird, verschließt der Gegenstand die Saugöffnung und der Druck im Innenraum nimmt ab. Im Fall einer drohenden Kollision liegt der innenseitige Vorsprung auf dem Lufteinlass des Stößels auf und verschließt diesen größtenteils. Auch in diesem Fall sinkt als Folge der Druck im Innenraum des Stößels.

Die Mittel zum Detektieren des Innendrucks im Stößel können dabei beispielsweise einen Drucksensor umfassen. Dabei kann der Drucksensor direkt im Innenraum des Stößels angeordnet sein. Alternativ kann vorgesehen sein, dass der Druckmesser lediglich strömungstechnisch mit dem Innenraum gekoppelt ist. So kann beispielsweise der Druckmesser in einer Verbindungsleitung zwischen dem Vakuumerzeuger und dem Stößel oder im Bereich des Vakuumerzeugers angeordnet sein.

Grundsätzlich sind beliebige Mittel zur direkten oder indirekten Messung des Drucks einsetzbar. Beispielsweise kann vorgesehen sein, dass die Mittel zum Detektieren des Innendrucks im Stößel einen Strömungsmesser umfassen, der die pro Zeiteinheit abgesaugte Luftmenge erfasst, wobei die pro Zeiteinheit abgesaugte Luftvolumen ein Maß für den Innendruck ist. Denn bei verschlossener bzw. weitgehend verschlossener Saugöffnung und verschlossenem bzw. weitgehend verschlossenem Lufteinlass kann weniger Luft in den Innenraum des Stößels einströmen. Durch Messungen mit einem Strömungsmesser, der zwischen dem Vakuumerzeuger und dem Innenraum angeordnet ist, kann somit indirekt auf den Druck im Innenraum des Stößels geschlossen werden.

In einer weiteren erfindungsgemäße Ausbildungsvariante weisen der Stößel und der Saugstutzen eine zumindest teilweise kreisförmige Querschnittsfläche auf. Dabei kann vorgesehen sein, dass der Saugstutzen einen im Querschnitt kreisförmigen Grundkörper aufweist und lediglich der innenseitige Vorsprung nicht kreisförmig ausgebildet ist. Insbesondere im Bereich, in dem der Saugstutzen den Stößel umfasst, ist eine kreisförmige Ausbildung beider Teile vorteilhaft. So ist auf diese Weise eine Abdichtung fertigungstechnisch einfach realisierbar ist und die beiden Teile können verdrehbar zueinander angeordnet werden.

In einer Ausführungsvariante ist der Stößel hohlzylindrisch, beispielsweise als ein Rohr, ausgebildet.

In einem Ausführungsbeispiel umfasst der Saugstutzen einen Faltenbalg, wobei der Faltenbalg die Stirnseite mit der Saugöffnung ausbildet. Der Faltenbalg ist kompressibel und erlaubt es, dass sich das erste Ende des Saugstutzens mit der Stirnseite und der Saugöffnung behutsam an den Gegenstand anschmiegen kann, um den Gegenstand effektiv anzusaugen.

In einem weiteren Ausführungsbeispiel umfasst der Saugstutzen ein Gleitelement, das im Bereich des zweiten Endes des Saugstutzens angeordnet ist und das dazu vorgesehen und ausgebildet ist, mit dem Stößel verschiebbar verbunden zu sein. Dabei zeichnet sich das Gleitelement dadurch aus, dass es einerseits luftdicht gegen den Stößel abdichtet und andererseits leichtläufig auf dem Stößel verschiebbar ist. Das kleine Element ist beispielsweise ebenfalls als Hohlzylinder ausgebildet.

Besonders vorteilhaft ist dabei die Ausbildung eines Saugstutzens, der einen Faltenbalg an seinem ersten Ende und ein Gleitelement an seinem zweiten Ende umfasst.

In einer weiteren Ausgestaltung ist zwischen dem Stößel und dem Saugstutzen eine Feder angeordnet ist, die eine Rückstellkraft in der Transportrichtung und der entsprechend gegensätzlichen Richtung aufweist. Dabei dient die Feder dazu, einen Grundabstand zwischen dem Stößel und dem Saugstutzen zu definieren und den Saugstutzen, der durch den Stößel in Richtung des Gegenstands bewegt wird, sanft an den Gegenstand zu drücken, damit sich die Stirnseite des Saugstutzens an den Gegenstand anlegt und dieser über die Saugöffnung angesogen werden kann. Gleichzeitig kann die Feder auch beim Ziehen des Gegenstandes Zugkräfte aufnehmen und somit verhindern, dass der Saugstutzen aus dem Stößel herausgezogen wird. Des Weiteren sorgt die Feder dafür, dass der Saugstutzen bzw. der Stößel stehts in eine gleiche Ausgangsposition zueinander verschoben werden. Es kann dabei vorgesehen sein, dass die Feder eine größere Rückstellkraft aufweist als der kompressible Saugstutzen. Auf diese Weise ist gewährleistet, dass sich beim Heranbewegen des Saugstutzens an den Gegenstand der Saugstutzen als erstes an den Gegenstand anlegt bevor die Feder maßgeblich komprimiert wird und sich somit Stößel und Saugstutzen gegeneinander verschieben.

In einer weiteren Ausgestaltung der Erfindung weist die Vorrichtung einen Endanschlag auf, der die maximale Verschiebung des Stößels aus dem Saugstutzen heraus begrenzt. Dabei kann ein Hinterschnitt durch einen auf dem Stößel befestigten Steg gebildet sein, welcher sich teilweise über den Saugstutzen erstreckt und in eine Einbuchtung am Saugstutzen ragt.

Die Transportrichtung kann sowohl einer horizontale Richtung oder einer vertikale Richtung entsprechen. Dabei kann alternativ auch eine kombinierte Bewegungsrichtung mit vertikalen und horizontalen Anteil vorgesehen sein.

Die Transportrichtung bezieht sich in dieser Erfindung auf die Richtung, in der der Gegenstand aus seiner vorherigen Position, beispielsweise einer Position in einem Lagerregal, durch Ansaugen gezogen wird. Wenn der Gegenstand im Eingriff ist, kann dieser jedoch weitergehend in verschiedene Richtungen transportiert werden, die nicht der ursprünglich als Transportrichtung definierten Richtung entsprechen. Insbesondere für den Fall, dass die Vorrichtung Teil einer größeren Baugruppe, beispielsweise Teil eines Schwenkarms ist, bezieht sich somit die definierte Transportrichtung lediglich auf ein Bezugssystem zwischen der Vorrichtung und dem Gegenstand. Ein Transportweg, entlang dessen der Gegenstand nach dem Herausziehen transportiert wird, kann folglich auch nicht der ursprünglich definierten Transportrichtung entsprechen.

Ein weiterer Aspekt der Erfindung betrifft ein Kommissioniersystem, welches eine Vorrichtung zum Ansaugen von Gegenständen mit den Merkmalen des Anspruch 1 besteht.

Die Erfindung wird nachfolgend unter Bezugnahme auf die Figuren der Zeichnung anhand mehrerer Ausführungsbeispiele näher erläutert. Es zeigen:
- Figur 1: eine Vorrichtung gemäß dem Stand der Technik mit einem beweglichen Stößel und einem fest damit verbundenen Saugstutzen zum Ansaugen von Gegenständen;
- Figur 2: eine nicht erfindungsgemäße Vorrichtung zum Ansaugen von Gegenständen mit einem beweglichen Stößel und einem relativ dazu verschiebbaren Saugstutzen;
- Figur 3: eine Vorrichtung gemäß der Figur 2, bei der der Stößel mit einem Gegenstand kollidiert;
- Figur 4: ein Ausführungsbeispiel einer Vorrichtung zum Ansaugen von Gegenständen mit einem Schutzmechanismus, der einen Stößel in der Transportrichtung zurückzieht, wenn die Einschubtiefe des Stößels einen vordefinierten Wert überschreitet, wobei der Schutzmechanismus eine Lichtschranke umfasst;
- Figur 5: das Ausführungsbeispiel der Figur 4, bei der die Lichtschranke unterbrochen ist und der Schutzmechanismus wirkt;
- Figur 6: eine weiteres Ausführungsbeispiel einer Vorrichtung zum Ansaugen von Gegenständen mit einem Schutzmechanismus, der einen Stößel in der Transportrichtung zurückzieht, wenn die Einschubtiefe des Stößels einen vordefinierten Wert überschreitet, wobei der Schutzmechanismus einen innenseitigen, am Saugstutzen ausgebildeten Vorsprung umfasst; und
- Figur 7: das Ausführungsbeispiel der Figur 6, bei der der Stößel durch den Vorsprung großenteils verschlossen ist und der Schutzmechanismus wirkt.

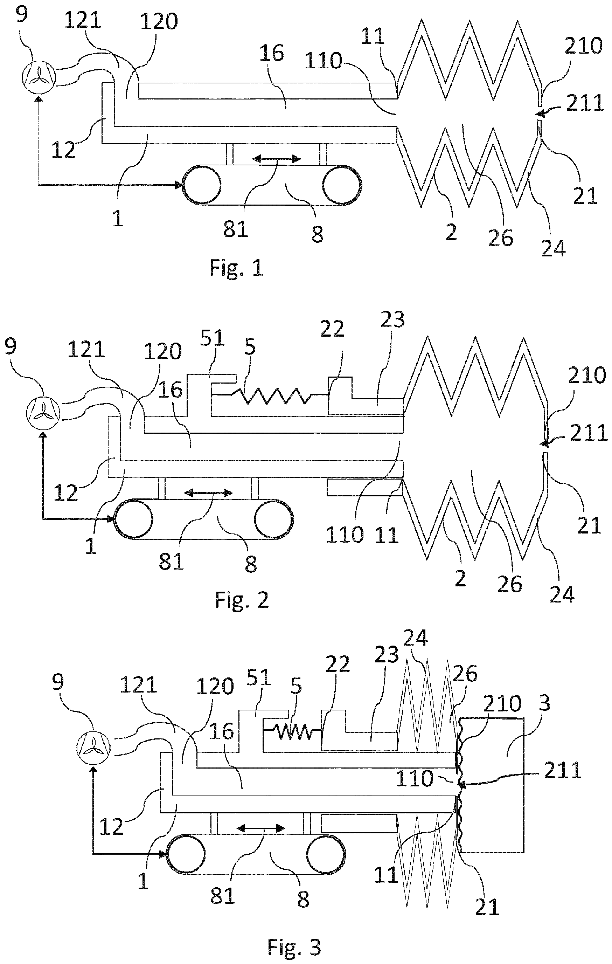

Die Figuren 1 bis 7 zeigen unterschiedliche Vorrichtungen, die dazu dienen, Gegenstände zu greifen, indem diese angesaugt werden. Typischerweise kommen solche Vorrichtungen bei Kommissioniersystemen zum Einsatz, bei denen beispielsweise Packungen zum Weitertransport aus einem Lagerregal gezogen werden.

Die Figur 1 stellt schematisch eine allgemein bekannte Vorrichtung zum Ansaugen von Gegenständen dar. Die Vorrichtung weist einen Stößel 1 mit einem ersten Ende 11 und einem zweiten Ende 12 auf. Der Stößel 1 ist in diesem Beispiel als ein hohlzylindrisches Rohr ausgebildet. An seinem ersten Ende 11 bildet der Stößel einen Lufteinlass 110. Der Stößel 1 ist fest mit einem Saugstutzen 2 verbunden.

Der Saugstutzen 2 ist kompressibel und weist einen Faltenbalg 24 auf. An dem dem Stößel entfernten ersten Ende 21 des Saugstutzens 2 befindet sich an einer Stirnseite 210 eine Saugöffnung 211. Die Saugöffnung 211 ist für das Ansaugen eines Gegenstands vorgesehen.

Im Bereich des zweiten Endes 12 des Stößels 1 befindet sich ein Luftauslass 120, an dem über eine Luftleitung 121 eine Vakuumpumpe 9 angeschlossen ist. Die Vakuumpumpe 9 saugt Luft aus einem Innenraum 16 des Stößels 1, der über den am ersten Ende 11 des Stößels 1 ausgebildeten Lufteinlass 110 mit einem Innenraum 26 des Saugstutzen 2 verbunden ist. Auf diese Weise entsteht ein Luftstrom von der Saugöffnung 211 durch beide Innenräume 16, 26 zur Vakuumpumpe 9. Wenn also ein Gegenstand an der Saugöffnung 211 angesaugt ist, verschließt dieser die Saugöffnung. Luft kann nicht nachströmen und als Folge sinkt der Innendruck.

Der Stößel 1 ist dabei mit einer Vorschubeinheit 8 verbunden, über die die Vorrichtung zu einem Gegenstand in einer Transportrichtung verfahrbar ist. Die Transportrichtung ist dabei die Richtung, in welcher der Gegenstand aus seiner ursprünglichen Position herausgezogen wird, um ihn an einen anderen Ort zu transportieren. Über die einen Drucksensor im Bereich der Vakuumpumpe 9 wird der Innendruck gemessen und in Abhängigkeit davon die Vorschubeinheit 8 gesteuert. Unterschreitet der Innendruck einen vordefinierten Wert, weil der Gegenstand angesogen und die Saugöffnung 211 verschlossen ist, so kehrt die Vorschubeinheit 8 die Vorschubrichtung um, verfährt die Vorrichtung in der entgegengesetzten Richtung, also der Transportrichtung, und zieht den Gegenstand mit sich.

Die Figur 2 stellt ein weiteres Beispiel einer Vorrichtung zum Ansaugen von Gegenständen dar. Dabei sind der Stößel 1 und der Saugstutzen 2 im Gegensatz zur Figur 1 verschiebbar miteinander verbunden. Der Saugstutzen 2 weist ein zweites Ende 22 auf, das durch ein Gleitelement 23 des Saugstutzens gebildet ist. Das Gleitelement 23 umschließt den Stößel 1 teilweise, wobei das erste Ende 11 des Stößels 1 in den Saugstutzen 2 hineinragt und somit der Stößel 1 in dem Gleitelement 23 verschiebbar gelagert ist.

Eine Feder 5 verbindet über eine Federbefestigung 51, welche fest mit dem Stößel 1 verbunden ist, den Stößel mit dem Gleitelement 23. Die Feder 5 weist eine Rückstellkraft auf, welche dazu dient, den Saugstutzen 2 sanft an den Gegenstand zu drücken, damit sich die Stirnseite 210 des Saugstutzens 2 an den Gegenstand anlegt und dieser über die Saugöffnung 241 angesogen werden kann. Gleichzeitig kann die Feder 5 auch beim Ziehen eines Gegenstandes 3 Zugkräfte aufnehmen und somit verhindern, dass der Saugstutzen 2 aus dem Stößel 1 gezogen wird.

Die Figur 3 zeigt das in der Figur 2 dargestellte Beispiel in einem Kollisionsfall. Dabei ist die Vorrichtung an einen Gegenstand 3 herangefahren und saugt diesen an, jedoch in fehlerhafter Weise. So ist der Fall dargestellt, dass das Vakuum nicht den vordefinierten Wert unterschreitet. Dies kann dadurch verursacht sein, dass der Gegenstand 3 eine ungleichmäßige Oberfläche aufweist oder dass die Saugöffnung 211 zwischen zwei benachbarte Gegenstände 3 vorgefahren ist, sodass jeweils Nebenluft gezogen wird. Als Folge verfährt der Stößel 1 immer weiter in Richtung des Gegenstandes 3, da das Unterschreiten des vordefinierten Druckwertes nicht erfolgt. Dabei können sowohl der Gegenstand 3 als auch der Faltenbalg 24 des Saugstutzens 2 beschädigt werden. Diese Situation wird als Kollisionsfall bezeichnet.

Es wird darauf hingewiesen, dass der Faltenbalg 24 ist in dieser Ansicht durch den Gegenstand 3 zusammengeschoben dargestellt ist (der Faltenbalg 24 ist nicht aufgrund eines Unterdrucks zusammengeschoben, da in dem betrachteten Fehlerfall kein ausreichender Unterdruck auftritt). Dabei weist der Faltenbalg 24 eine geringere Rückstellkraft als die Feder 5 auf, sodass dieser primär zusammengeschoben wird.

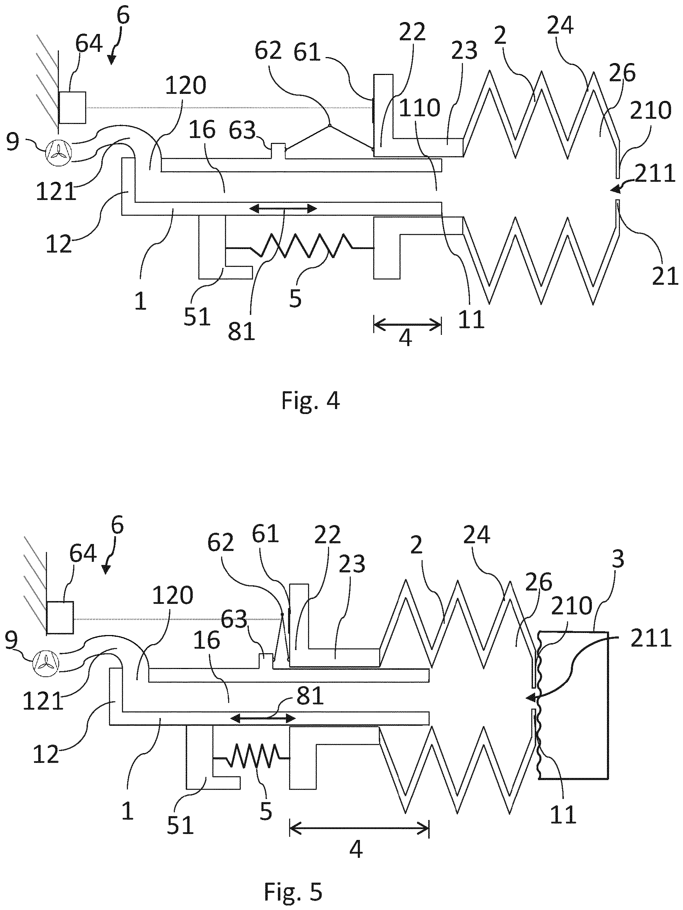

Die Figur 4 zeigt ein Ausführungsbeispiel einer Vorrichtung zum Ansaugen eines Gegenstandes, bei der ein oben dargestellter Kollisionsfall vermieden ist. Die Vorrichtung weist eine Sensorikeinheit 6 auf, die sensorisch erfasst, wenn der Stößel 1 einen vordefinierten Grenzwert einer Einschubtiefe 4 überschreitet. Die Einschubtiefe 4 ist dadurch definiert, wie weit der Stößel 1 in den Saugstutzen 2 hineinragt. Dabei entspricht die Einschubtiefe 4 dem Abstand zwischen dem ersten Ende 11 des Stößels 1 und dem zweiten Ende 22 des Saugstutzens 2.

Die Sensorikeinheit 6 umfasst einen Sensor 64, der als eine Reflexlichtschranke ausgebildet ist und ein Lichtsignal auf eine reflektierende Fläche 61 sendet, von der das Lichtsignal zurück zum Sensor 64 reflektiert wird. Die reflektierende Fläche 61 ist auf dem Gleitelement 23 des Saugstutzens 2 angeordnet. Zwischen dem Gleitelement 23 und einem auf dem Stößel 1 befestigten Sockel 63 ist ein Signalunterbrecher 62 angeordnet. Der Signalunterbrecher 62 umfasst im dargestellten Ausführungsbeispiel zwei starre Elemente, die über drei Gelenke untereinander sowie mit dem Sockel 63 bzw. dem Gleitelement 23 verbunden sind. Die Anordnung ist derart, dass sich der Signalunterbrecher 62 aufrichtet, wenn das Gleitelement 23 und der Sockel 63 sich aufeinander zubewegen. Der dargestellte Signalunterbrecher 62 ist dabei nur beispielhaft zu verstehen.

In der Figur 4 ist, wie in den folgenden Figuren, auf die Darstellung der Vorschubeinheit 8 verzichtet. Die Bewegbarkeit des Stößels 1 über die nun nicht dargestellte Vorschubeinheit 8 ist allerdings durch die Pfeile 81 symbolisiert.

Die Figur 5 zeigt das anhand der Figur 4 gezeigte Ausführungsbeispiel in einem der Figur 3 entsprechenden Kollisionsfall, bei dem der angesaugte Gegenstand 3 nicht angesaugt wurde. Im Gegensatz zu Figur 3 verhindert dabei ein Schutzmechanismus, der bei Überschreitung des vordefinierten Grenzwerts der Einschubtiefe 4 auslöst, dass der Stößel 1 in die Richtung des Gegenstandes 3 weiterfährt und diesen beschädigt.

Beim Einschieben des Stößels 1 in den Saugstutzen 2 bewegen sich der Sockel 63 und das Gleitelement 23 aufeinander zu. Der Signalunterbrecher 62 ist dabei so angeordnet, dass er sich beim Unterschreiten eines bestimmten Abstandes zwischen Gleitelement 23 und Sockel 63, welcher dem vordefinierten Grenzwerts der Einschubtiefe 4 entspricht, so weit aufrichtet, dass er das Lichtsignal des Sensors 64 unterbricht. Das Lichtsignal wird folglich nicht mehr durch die reflektierende Fläche 61 zum Sensor 64 zurück reflektiert und der Sensor 64 sendet ein Signal zur Vorschubeinheit aus.

In dem Moment, in dem durch den Sensor 64 das Überschreiten des Grenzwerts der Einschubtiefe 4 festgestellt ist, wird der Vorschub gestoppt und der Stößel 1 bewegt sich nicht mehr auf den Gegenstand 3 zu und wird in der Transportrichtung zurückgezogen. Auf diese Weise ist ein weiteres Hervorfahren des Stößels 1 in den Gegenstand 3 verhindert und eine Kollision vermieden.

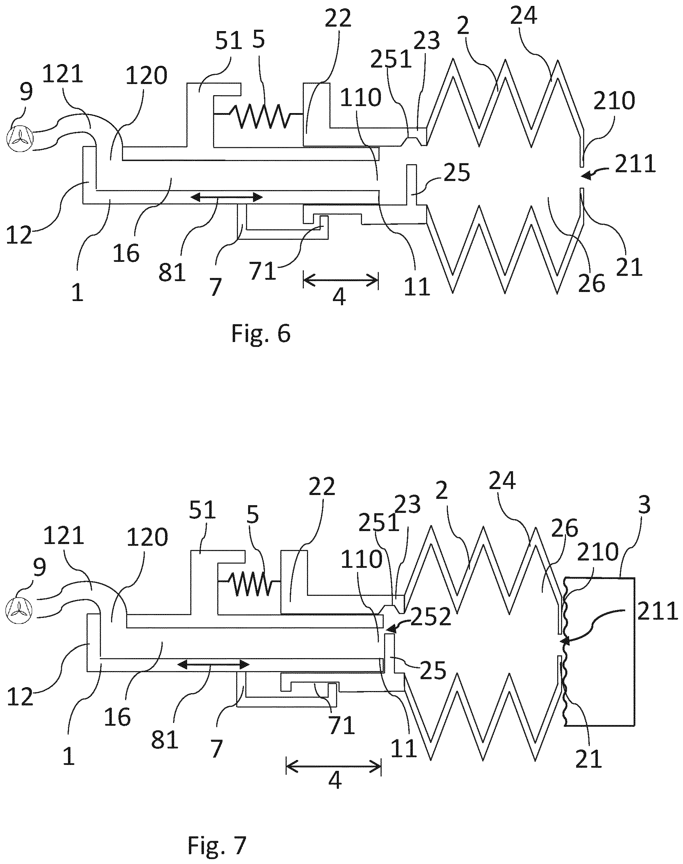

Die Figur 6 zeigt ein weiteres Ausführungsbeispiel mit einem Schutzmechanismus, der eine Kollision des Stößels 1 mit einem Gegenstand 3 verhindert. Im Gegensatz zum vorherigen Beispiel basiert der Mechanismus hier jedoch nicht auf einem zusätzlichen Sensor 64, welcher das Überschreiten der vordefinierten maximalen Einschubtiefe 4 feststellt, sondern wird direkt durch Messung des Vakuums über einen nicht dargestellten Druckmesser ermittelt.

Der Saugstutzen 2 weist einen innenseitigen Vorsprung 25 auf, der innenseitig an dem Gleitelement 23 angeordnet ist. Der Vorsprung 25 erstreckt sich dabei über einen Großteil der Querschnittsfläche des Innenraums 26 des Saugstutzens 2. Um einen ausreichenden Luftstrom weiterhin bereitzustellen, kann vorgesehen sein, dass in einem dem Vorsprung 25 gegenüberliegenden innenseitigen Bereich der Innenwand des Gleitelements 23 ein Teilbereich 251 ausgespart ist, sodass die Luft einfacher um den Vorsprung 25 herum strömen kann. Wie in der Figur 7 dargestellt, liegt beim Verschieben des Stößels 1 über einen vordefinierten Grenzwert der Einschubtiefe 4 der Vorsprung 25 an dem Lufteinlass 110 des Stößels 1 an und verschließt diesen teilweise. Somit kann weniger Luft zur Vakuumpumpe 9 strömen und der Luftdruck im Innenraum 16 des Stößels 1 und an der Vakuumpumpe 9 nimmt ab.

Dabei verschließt der Vorsprung 25 den Lufteinlass 110 nicht vollständig, sodass ein Spalt 252 geöffnet bleibt und weiterhin ein geringere Teil Luft durchströmen kann. Dennoch kommt es in Folge des teilweisen Verschluss des Lufteinlasses 110 am Stößel 1 zu einem Druckabfall im Innenraum 16 des Stößels 1. Der Druck im Innenraum 16 wird dabei über einen nicht dargestellten Druckmesser gemessen. Dieser befindet sich außerhalb des Innenraums im Bereich der Vakuumpumpe 9 und ist über die Luftleitung 121 mit dem Innenraum strömungstechnisch gekoppelt. In alternativen Ausführungsbeispielen kann der Druckmesser auch direkt im Innenraum 16 des Stößels 1 angeordnet sein.

Des Weiteren weist die dargestellte Vorrichtung einen Endanschlag auf, durch den verhindert wird, dass der Stößel 1 gänzlich aus dem Saugstutzen 2 herausgezogen werden kann. Dabei ist ein Hinterschnitt durch einen auf dem Stößel 1 befestigten Steg 7 gebildet, welcher sich teilweise über den Saugstutzen 2 erstreckt und in eine Einbuchtung 71, die sich an der Außenseite des Gleitelements 23 befindet, ragt. Würde man versuchen den Stößel 1 aus dem Saugstutzen 2 zu ziehen, so würde der Steg 7 seitlich gegen die Einbuchtung anliegen und ein Herausziehen verhindern. Der Endanschlag ist in diesem Ausführungsbeispiel exemplarisch dargestellt. In weiteren Ausführungsbeispielen kann vorgesehen sein, den Endanschlag auch in Kombination mit den oben gezeigten Ausführungsbeispielen zu verwenden.

Die Figur 7 stellt das Ausführungsbeispiel gemäß der Figur 6 dar, wobei die definierte maximale Einschubtiefe 4 des Stößels 1 in dem Saugstutzen 2 erreicht ist und der Schutzmechanismus zur Verhinderung der Kollision des Stößels mit dem Gegenstand 3 wirkt.

Dabei ist der Stößel 1 so weit in den Saugstutzen 2 geschoben, dass der innenseitige Vorsprung 25 am Gleitelement 23 gegen den Lufteinlass 110 des Stößels 1 anliegt und diesen teilweise verschließt. Auf diese Weise ist der Luftstrom zur Vakuumpumpe 9 größtenteils unterbunden und der Innendruck fällt im Stößel 1 und an der Vakuumpumpe 9 ab.

Anstelle einer Druckmessung kann in alternativen Ausführungsbeispielen der Druckabfall auch indirekt durch eine Änderung des Motorstroms an der Vakuumpumpe 9 oder einen Strömungsmesser detektiert werden. Analog zum in Figur 1 dargestellten Ausführungsbeispiel ist dabei die Vakuumpumpe 9 mit der nicht dargestellten Vorschubeinheit, symbolisiert durch die Pfeile 81, verbunden. Wird ein Unterschreiten des Drucks festgestellt, so wird anschließend der Stößel 1 weg von dem Gegenstand 3 gezogen.

Das in den Figuren 6 und 7 dargestellte Beispiel hat somit den Vorteil, dass die Vorrichtung nach jedem Versuch, den Gegenstand 3 festzusaugen, wieder zurückfährt und unabhängig davon, ob der Gegenstand 3 fest angesogen wird, eine Kollision zwischen Stößel und Gegenstand verhindert ist:
Für den erfolgreichen Fall, dass der Gegenstand 3 durch die Saugöffnung 211 angesaugt und fest gegriffen ist, verschließt der Gegenstand 3 die Saugöffnung 211, sodass der Luftstrom zur Vakuumpumpe 9 größtenteils unterbunden ist. Anschließend kann die Vorrichtung über die Vorschubeinheit den Gegenstand 3 in Transportrichtung aus seiner Position ziehen.

Für den Fall, dass der Gegenstand 3, beispielsweise durch Nebenluft, nicht fest angesaugt wird, verfährt der Stößel so 1 lange in die Richtung des Gegenstandes 3, bis der Lufteinlass 110 des Stößels 1 durch den innenseitigen Vorsprung 25 teilweise verdeckt wird. Auch in diesem Fall wird der Luftstrom größtenteils unterbunden, sodass der Druck sinkt. Folglich kehrt die Vorschubeinheit entsprechend die Vorschubrichtung um und zieht den Stößel in Transportrichtung zurück.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Beispielsweise kann vorgesehen sein, dass der Schutzmechanismus sowohl eine Sensorikeinheit 6, beispielsweise durch eine Lichtschranke, die das Überschreiten des vordefinierten Werts der Einschubtiefe 4 misst, als auch einen innenseitigen Vorsprung 25 an dem Saugstutzen 2 aufweist, durch den eine Druckänderung beim Überschreiten des vordefinierten Werts der Einschubtiefe 4 erzeugt wird, wobei diese durch einen Druckmesser erfasst wird.

Es wird darauf hingewiesen, dass beliebige der beschriebenen Merkmale separat oder in Kombination mit beliebigen anderen Merkmalen eingesetzt werden können, sofern sie sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Vorrichtung zum Ansaugen und Transportieren von Gegenständen (3), die aufweist:
- einen Stößel (1) mit zwei Enden (11, 12), der an dem einen Ende (11) einen Lufteinlass (110) und an dem anderen Ende (12) einen Luftauslass (120) aufweist, wobei der Stößel (1) in einer Transportrichtung linear bewegbar ist,
- einen Vakuumerzeuger (9), welcher mit dem Luftauslass (120) verbunden ist,
- einen mit dem Stößel (1) verbundenen, komprimierbaren Saugstutzen (2), der dazu vorgesehen und ausgebildet ist, durch den Stößel (1) in Anlage an einen Gegenstand (3) gebracht zu werden und den Gegenstand (3) anschließend zu transportieren, wobei der Saugstutzen (2) aufweist:
∘ ein erstes Ende (21) mit einer Stirnseite (210), in der eine Saugöffnung (211) ausgebildet ist, wobei die Saugöffnung (211) dazu ausgebildet ist, an dem Gegenstand (3) anzuliegen und von diesem zumindest weitgehend verschlossen zu werden, und
∘ ein zweites Ende (22), welches den Stößel (1) umschließt und in dem der Stößel (1) in der Transportrichtung verschiebbar angeordnet ist, wobei das erste Ende (11) des Stößels (1) in den Saugstutzen (2) eingeschoben ist,
∘ wobei eine Einschubtiefe (4) durch den Abstand in Transportrichtung zwischen dem ersten Ende (11) des Stößels (1) und dem zweiten Ende (22) des Saugstutzens (2) definiert ist,
- wobei der Stößel (1) und der Saugstutzen (2) im Normalbetrieb strömungstechnisch verbunden sind und ein am Luftauslass (120) des Stößels (1) durch den Vakuumerzeuger (9) angelegtes Vakuum an der Saugöffnung (211) anliegt, so dass nach einem Verschluss der Saugöffnung (211) der Aufbau eines Vakuums in Stößel (1) und Saugstutzen (2) erfolgt und ein angesaugter Gegenstand (3) in der Transportrichtung transportierbar ist,
**gekennzeichnet durch**
einen Schutzmechanismus, der den Stößel (1) in der Transportrichtung zurückzieht, wenn die Einschubtiefe (4) einen vordefinierten Wert überschreitet.

2. Vorrichtung nach Anspruch 1, **dadurch gekennzeichnet, dass** der Schutzmechanismus eine Vorschubeinheit (8) umfasst, welche dazu ausgebildet ist, beim Überschreiten des vordefinierten Wertes der Einschubtiefe (4) den Stößel (1) zurückzuziehen.

3. Vorrichtung nach Anspruch 1 oder 2, **dadurch gekennzeichnet, dass** der Schutzmechanismus eine Sensorikeinheit (6) aufweist, die dazu ausgebildet ist, das Überschreiten des vordefinierten Wertes der Einschubtiefe (4) zu detektieren und ein Signal zum Zurückziehen des Stößels (1) an die Vorschubeinheit (8) zu geben.

4. Vorrichtung nach Anspruch 3, **dadurch gekennzeichnet, dass** die Sensorikeinheit (6) eine Lichtschranke umfasst, wobei ein Lichtsignal der Lichtschranke beim Überschreiten des für die Einschubtiefe (4) vordefinierten Wertes unterbrochen ist.

5. Vorrichtung nach Anspruch 4, **dadurch gekennzeichnet, dass** zwischen dem Stößel (1) und dem Saugstutzen (2) ein Signalunterbrecher (62) angeordnet ist, welcher dazu ausgebildet und vorgesehen ist, sich mechanisch durch die Relativbewegung zwischen Stößel (1) und Saugstutzen (2) aufzustellen, wobei sich der Signalunterbrecher (62) beim Überschreiten der Einschubtiefe (4) über den vordefinierten Wert so weit aufstellt, dass das Lichtsignal der Lichtschranke unterbrochen wird.

6. Vorrichtung nach einem der vorangehenden Ansprüche, **dadurch gekennzeichnet, dass** der Schutzmechanismus dazu ausgebildet ist, den Stößel (1) in der Transportrichtung zurückzuziehen, wenn der Druck im Stößel (1) einen vordefinierten Druckwert unterschreitet, wobei der Saugstutzen (2) einen innenseitigen Vorsprung (25) aufweist, der so positioniert ist, dass bei Überschreitung des vordefinierten Werts der Einschubtiefe (4) der Lufteinlass (110) an dem Vorsprung (25) zur Anlage kommt und von diesem zumindest teilweise dahingehend verschlossen wird, dass der Druck im Stößel (1) unter den vordefinierten Druckwert fällt.

7. Vorrichtung nach Anspruch 6, **dadurch gekennzeichnet, dass** bei Anlage des Lufteinlasses (110) am Vorsprung (25) der Lufteinlass (110) nicht vollständig verschlossen wird.

8. Vorrichtung nach Anspruch 6 oder 7, soweit rückbezogen auf Anspruch 2, **dadurch gekennzeichnet, dass** die Vorschubeinheit (8) dazu vorgesehen und ausgebildet ist, den Stößel (1) in der Transportrichtung zurückzuziehen, wenn der Druck im Stößel (1) den vordefinierten Druckwert unterschreitet.

9. Vorrichtung nach Anspruch 8, **gekennzeichnet durch** Mittel zum Detektieren des Innendrucks im Stößel (1), wobei die Vorschubeinheit (8) dazu ausgebildet ist, den Stößel (1) in der Transportrichtung zurückzuziehen, wenn die Mittel den vordefinierten Druckwert detektieren.

10. Vorrichtung nach Anspruch 9, **dadurch gekennzeichnet, dass** die Mittel zum Detektieren des Innendrucks im Stößel (1) einen Drucksensor oder einen Strömungsmesser umfassen, der die pro Zeiteinheit abgesaugte Luftmenge erfasst, wobei die pro Zeiteinheit abgesaugte Luftvolumen ein Maß für den Innendruck ist.

11. Vorrichtung nach einem der vorangehenden Ansprüche, **dadurch gekennzeichnet, dass** der Saugstutzen (2) einen Faltenbalg (24) umfasst, der die Stirnseite (210) mit der Saugöffnung (211) ausbildet.

12. Vorrichtung nach einem der vorangehenden Ansprüche, **dadurch gekennzeichnet, dass** der Saugstutzen (2) ein Gleitelement (23) umfasst, das im Bereich des zweiten Endes (22) des Saugstutzens (2) angeordnet ist und dazu vorgesehen und ausgebildet ist, mit dem Stößel (1) verschiebbar verbunden zu sein.

13. Vorrichtung nach einem der vorangehenden Ansprüche, **dadurch gekennzeichnet, dass** eine Feder (5) zwischen dem Stößel (1) und dem Saugstutzen (2) angeordnet ist, die eine Rückstellkraft in Transportrichtung aufweist.

14. Vorrichtung nach einem der vorangehenden Ansprüche, **dadurch gekennzeichnet, dass** die Vorrichtung einen Endanschlag aufweist, der die maximale Verschiebung des Stößels (1) aus dem Saugstutzen (2) heraus begrenzt.

15. Kommissioniersystem mit einer Vorrichtung zum Ansaugen und Transportieren von Gegenständen (3) nach einem der vorangehenden Ansprüche.
